(19) Europäisches Patentamt European Patent Office Office européen des brevets

(11) **EP 4 379 864 A1**

(12) **EUROPEAN PATENT APPLICATION**
published in accordance with Art. 153(4) EPC

(43) Date of publication:
**05.06.2024 Bulletin 2024/23**

(21) Application number: **22849295.5**

(22) Date of filing: **15.07.2022**

(51) International Patent Classification (IPC):
**H01M 4/525** (2010.01)    **H01M 4/36** (2006.01)

(52) Cooperative Patent Classification (CPC):
**H01M 4/36; H01M 4/525;** Y02E 60/10

(86) International application number:
**PCT/JP2022/027862**

(87) International publication number:
**WO 2023/008232 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.07.2021 JP 2021125806**

(71) Applicant: **Panasonic Intellectual Property Management Co., Ltd.**
**Osaka-shi, Osaka 540-6207 (JP)**

(72) Inventors:
• **JITO, Daizo**
  **Kadoma-shi, Osaka 571-0057 (JP)**
• **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)    The present invention provides a positive electrode active material which is capable of improving the battery capacity. A positive electrode active material for nonaqueous electrolyte secondary batteries according to one embodiment of the present disclosure contains a first lithium transition metal composite oxide that is represented by general formula $Li_aNi_bM1_{1-b}O_2$ (wherein $1.5 \le a \le 2.5$; $0.95 \le b \le 1.00$; and M1 represents at least one element that is selected from among Cu, Sr, Ca, Nb, Si and Al); the first lithium transition metal composite oxide has voids inside; and the void fraction of the first lithium transition metal composite oxide is 2% to 10%.

Figure 1

**Description**

TECHNICAL FIELD

The present disclosure relates to a positive electrode active material for a non-aqueous electrolyte secondary battery, and to a non-aqueous electrolyte secondary battery which uses the positive electrode active material.

BACKGROUND ART

In the related art, non-aqueous electrolyte secondary batteries are widely in use in which the battery is charged and discharged by moving Li ions or the like between a positive electrode and a negative electrode. In recent years, further improvements in battery characteristics are demanded. Patent Literature 1 discloses a secondary battery in which $Li_2NiO_2$ is contained in the positive electrode as a Li supplementing material while an irreversible negative electrode active material such as a Si-based material or the like is contained in the negative electrode, so that Li ions are supplied to the negative electrode during the initial charging, and reduction of capacity maintenance rate of initial charging and discharging is suppressed.

CITATION LIST

PATENT LITERATURE

PATENT LITERATURE 1: Japanese Patent No. 6058151

SUMMARY

TECHNICAL PROBLEM

During the initial charging, $Li_2NiO_2$ releases Li and changes to $LiNiO_2$. There is substantially no contribution of $LiNiO_2$ to subsequent charging and discharging. As such, if an amount of $Li_2NiO_2$ contained in the positive electrode is too large, the battery capacity is reduced. The present inventors have eagerly reviewed, and found that it is possible to supply a sufficient amount of Li ions to the negative electrode while suppressing the amount of $Li_2NiO_2$ contained in the positive electrode, depending on a form of $Li_2NiO_2$. Because the technique of Patent Literature 1 does not take into consideration an optimum form of $Li_2NiO_2$, there still remains room of improvement.
An advantage of the present disclosure lies in provision of a positive electrode active material which can improve the battery capacity.

SOLUTION TO PROBLEM

According to one aspect of the present disclosure, there is provided a positive electrode active material for a non-aqueous electrolyte secondary battery, the positive electrode active material including a first lithium-transition metal composite oxide represented by a general formula $Li_aNi_bM1_{1-b}O_2$ (wherein $1.5 \leq a \leq 2.5$, $0.95 \leq b \leq 1.00$, and M1 is at least one element selected from the group consisting of Cu, Sr, Ca, Nb, Si, and Al), wherein the first lithium-transition metal composite oxide has pores at an inside thereof, and a porosity of the first lithium-transition metal composite oxide is 2%~10%.
According to another aspect of the present disclosure, there is provided a non-aqueous electrolyte secondary battery including a positive electrode including the positive electrode active material, a negative electrode, and a non-aqueous electrolyte.

ADVANTAGEOUS EFFECTS OF INVENTION

With the positive electrode active material according to an aspect of the present disclosure, the battery capacity of the non-aqueous electrolyte secondary battery can be improved.

BRIEF DESCRIPTION OF DRAWINGS

FIG. 1 is a cross-sectional diagram of a non-aqueous electrolyte secondary battery according to an embodiment of the present disclosure.

FIG. 2 is a diagram enlarging a part of a cross section of an electrode assembly according to an embodiment of the present disclosure.

FIG. 3 is a diagram schematically showing a cross section of a first lithium-transition metal oxide according to an embodiment of the present disclosure.

DESCRIPTION OF EMBODIMENTS

In a non-aqueous electrolyte secondary battery, a phenomenon is observed in which a part of Li ions moved from the positive electrode to the negative electrode during the initial charging is continued to be absorbed by the negative electrode active material, and is not released from the negative electrode during discharging, resulting in reduction of a capacity maintenance rate of the battery. This phenomenon is observed also when a typical carbon-based material such graphite is used as the negative electrode active material, and is particularly significant when a material such as a Si-containing compound is used. In consideration of this, in order to suppress the reduction of the capacity maintenance rate, a method is being proposed in which $Li_2NiO_2$ is added to the positive electrode, to supply Li ions, which compensate for the irreversibility of the negative electrode, from the positive electrode. $Li_2NiO_2$ functions as a supplementing material for supplying Li ions during the initial charging. However, $Li_2NiO_2$ releases Li during the initial charging and changes to $LiNiO_2$. There is substantially no contribution of $LiNiO_2$ to the subsequent charging and discharging. Because of this, when an amount of $Li_2NiO_2$ contained in the positive electrode is too large, the battery capacity is reduced.

The present inventors have eagerly reviewed for solving the above-described problem, and found that a sufficient amount of Li ions can be supplied to the negative electrode while suppressing the amount of $Li_2NiO_2$ contained in the positive electrode, and the battery capacity can thus be improved, by employing a first lithium-transition metal composite oxide represented by a general formula $Li_aNi_bM1_{1-b}O_2$ such as $Li_2NiO_2$, and having pores inside the first lithium-transition metal composite oxide, with a porosity of 2%~10%.

A positive electrode active material and a non-aqueous electrolyte secondary battery which uses the positive electrode active material, according to an embodiment of the present disclosure will now be described in detail. A selective combination of a plurality of embodiments and alternative configurations described below is within the scope of the present disclosure.

In the following, a circular cylindrical battery in which an electrode assembly 14 of a wound type is housed in an outer housing can 16 of a circular cylindrical shape with a bottom is exemplified, but the outer housing of the battery is not limited to the circular cylindrical outer housing can, and may alternatively be, for example, a polygonal outer housing can (polygonal battery), a coin shape outer housing can (coin shape battery), or the like. Alternatively, the outer housing may be an outer housing formed from laminated sheets including a metal layer and a resin layer (laminated battery). The electrode assembly may alternatively be a layered type electrode assembly in which a plurality of positive electrodes and a plurality of negative electrodes are alternately layered with a separator therebetween.

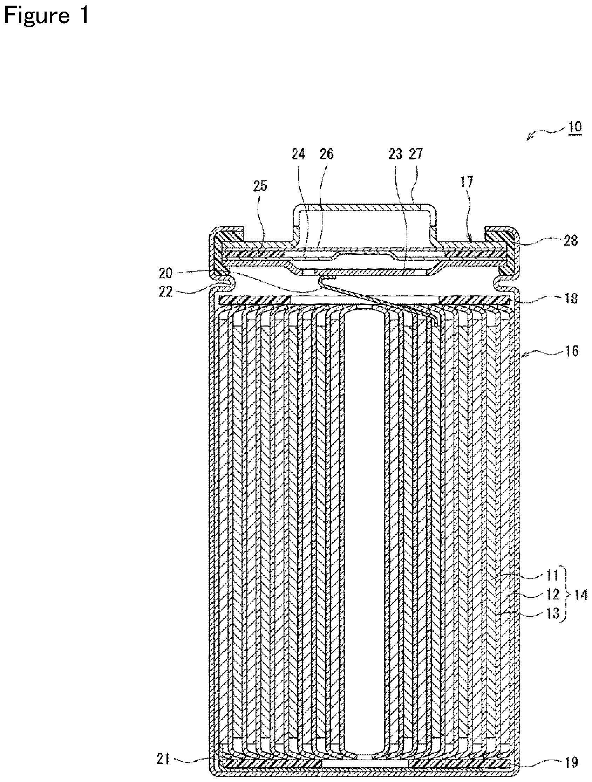

FIG. 1 is a diagram schematically showing a cross section of a non-aqueous electrolyte secondary battery 10 according to an embodiment of the present disclosure. As shown in FIG. 1, the non-aqueous electrolyte secondary battery 10 includes the electrode assembly 14 of a wound type, a non-aqueous electrolyte, and an outer housing can 16 which houses the electrode assembly 14 and the non-aqueous electrolyte. The electrode assembly 14 includes a positive electrode 11, a negative electrode 12, and a separator 13, and has a wound type structure in which the positive electrode 11 and the negative electrode 12 are wound in a spiral shape with the separator 13 therebetween. The outer housing can 16 is a metal container having a circular cylindrical shape with a bottom, opened on one side in an axial direction. The opening of the outer housing can 16 is blocked by a sealing assembly 17. In the following, for the convenience of the description, a side of the battery near the sealing assembly 17 will be referred to as an upper side, and a side of a bottom of the outer housing can 16 will be described as a lower side.

Each of the positive electrode 11, the negative electrode 12, and the separator 13 forming the electrode assembly 14 has a band-shaped elongated structure, and the positive electrode 11, the negative electrode 12, and the separator 13 are wound in a spiral shape so as to be alternately layered in a radial direction of the electrode assembly 14. The negative electrode 12 is formed in a size slightly larger than the positive electrode 11 in order to prevent precipitation of lithium. That is, the negative electrode 12 is formed to be longer in a longitudinal direction and in a width direction (short side direction) than the positive electrode 11. The separator 13 is formed in a size slightly larger than at least the positive electrode 11, and two separators 13 are placed, to sandwich the positive electrode 11. The electrode assembly 14 has a positive electrode lead 20 connected to the positive electrode 11 by welding or the like, and a negative electrode lead 21 connected to the negative electrode 12 by welding or the like.

Insulating plates 18 and 19 are placed respectively above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the outer housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the outer housing can 16 by welding or the like, and the outer housing can 16 serves as a negative electrode terminal.

As described above, the outer housing can 16 is a metal container of a circular cylindrical shape with a bottom, opened on one side in an axial direction. A gasket 28 is provided between the outer housing can 16 and the sealing assembly 17, so as to secure airtightness of an internal space of the battery, and an insulating property between the outer housing can 16 and the sealing assembly 17. On the outer housing can 16, a groove portion 22 is formed by a part of a side surface portion protruding toward an inner side, and supports the sealing assembly 17. The groove portion 22 is desirably formed in an annular shape along a circumferential direction of the outer housing can 16, and supports the sealing assembly 17 with an upper surface thereof. The sealing assembly 17 is fixed to an upper part of the outer housing can 16 by the groove portion 22 and an opening end of the outer housing can 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to occurrence of abnormality in the battery, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is discharged from an opening of the cap 27.

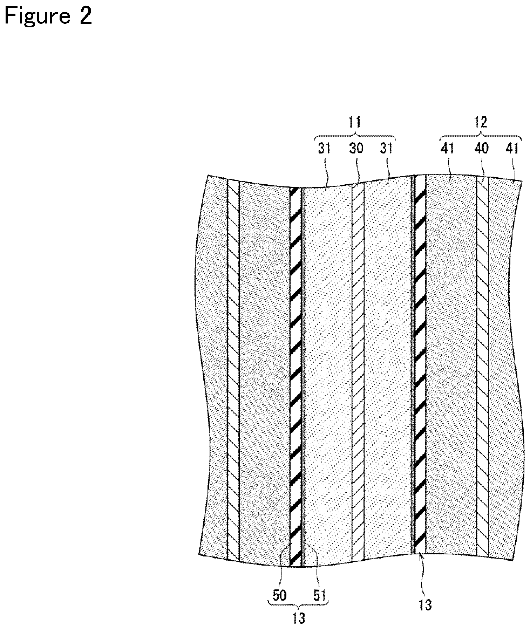

Next, with reference to FIG. 2, the positive electrode 11, the negative electrode 12, the separator 13, and the non-aqueous electrolyte forming the non-aqueous electrolyte secondary battery 10 will be described in detail. In particular, the positive electrode 11 will be described in detail. FIG. 2 is a schematic diagram enlarging a part of a cross section of the electrode assembly 14.

<Positive Electrode>

As shown in FIG. 2, the positive electrode 11 comprises a positive electrode core 30, and a positive electrode mixture layer 31 formed over at least one surface of the positive electrode core 30. For the positive electrode core 30, there may be employed a foil of a metal which is stable within a potential range of the positive electrode 11 such as aluminum and an aluminum alloy, a film on a surface layer of which the metal is placed, or the like. The positive electrode mixture layer 31 includes a positive electrode active material, a binder agent, and a conductive agent, and is desirably formed over both surfaces of the positive electrode core 30. For the positive electrode active material, a lithium-transition metal composite oxide is used. The positive electrode 11 can be produced by applying a positive electrode mixture slurry including the positive electrode active material, the binder agent, the conductive agent, and the like over the positive electrode core 30, drying the applied film, and compressing the dried film to form the positive electrode mixture layer 31 over both surfaces of the positive electrode core 30.

As the binder agent included in the positive electrode mixture layer 31, there may be exemplified a fluororesin such as polytetrafluoroethylene (PTFE), polyvinylidene fluoride (PVDF), polyacrylonitrile (PAN), polyimide, an acrylic resin, polyolefin, or the like. These resins may be used in combination with a cellulose derivative such as carboxymethyl cellulose (CMC) or a salt thereof, polyethylene oxide (PEO), or the like. A content of the binder agent is desirably 0.1 mass%~5 mass% with respect to a total mass of the positive electrode mixture layer 31, and more desirably 0.5 mass%~3 mass%.

As the conductive agent included in the positive electrode mixture layer 31, there may be exemplified particulate conductive agents such as carbon black, acetylene black, Ketjenblack, and graphite, fiber-form conductive agents such as vapor phase grown carbon fiber (VGCF), electrospun carbon fiber, polyacrylonitrile (PAN)-based carbon fiber, pitch-based carbon fiber, graphene, and carbon nanotube (CNT), or the like. A content of the conductive agent is desirably 0.01 mass%~5 mass% with respect to a total mass of the positive electrode mixture layer 31, and more desirably 0.05 mass%~3 mass%.

The positive electrode mixture layer 31 includes at least a first lithium-transition metal composite oxide. The first lithium-transition metal composite oxide (hereinafter also referred to as a "composite oxide (A)") is a composite oxide represented by a general formula $Li_aNi_bM1_{1-b}O_2$ (wherein $1.5 \leq a \leq 2.5$, $0.95 \leq b \leq 1.00$, and M1 is at least one element selected from the group consisting of Cu, Sr, Ca, Nb, Si, and Al). The composite oxide (A) is, for example, $Li_2NiO_2$.

Desirably, the positive electrode mixture layer 31 further includes a second lithium-transition metal composite oxide (hereinafter also referred to as a "composite oxide (B)"). The composite oxide B is a composite oxide represented by a general formula $Li_cNi_{2-c-d}M2_dO_2$ (wherein $0<c\leq0.5$, $0\leq d\leq0.5$, and M2 is at least one metal element other than Li and Ni). When both the composite oxides (A) and (B) exist in the positive electrode mixture layer 31, an increase in resistance during the initial charging and discharging and in an initial stage of a cycle test can be specifically suppressed. It can be deduced that the composite oxide (B) protects a particle surface of the composite oxide (A), to effectively suppress degradation of the particle surface, and also to suppress a side reaction between the composite oxide (A) and the electrolyte. As a result, the increase in the resistance can be effectively suppressed. The composite oxide (B) may be mixed with the composite oxide (A) by applying a strong shearing force and a strong compressive force, and adhered on the surface of the composite oxide (A).

The composite oxide (B) achieves the above-described advantage with an addition of a small amount, but from the viewpoint of effectively suppressing the increase in the resistance while maintaining a high capacity, there exists a desirably range for the amount of addition of the composite oxide (B). A content of the composite oxide (B) is desirably 0.1 mass%~20 mass% with respect to the mass of the composite oxides (A) and (B), more desirably 0.5 mass%~20 mass%, further desirably 1 mass%~15 mass%, and particularly desirably 2 mass%~15 mass%. When the amount of the composite oxide (B) is within these ranges, the increase in the resistance can be effectively suppressed.

Desirably, the positive electrode mixture layer 31 further includes a third lithium-transition metal composite oxide (hereinafter also referred to as a "composite oxide (C)"). The composite oxide (C) is a composite oxide represented by a general formula $Li_xNi_{1-y-z}Co_yM3_zO_2$ (wherein $0.97\leq x\leq1.2$, $0\leq y\leq0.2$, $0<z\leq0.5$, and M3 is at least one element selected from the group consisting of Mn, W, Mg, Mo, Nb, Ti, Si, Al, and Zr). When the composite oxides (A) and (B) and the composite oxide (C) are used in combination, a non-aqueous electrolyte secondary battery 10 can be realized having a higher capacity and with the increase in the resistance suppressed in a greater degree.

The composite oxide (C) is added in an amount larger than the composite oxides (A) and (B) to the positive electrode mixture layer 31, from the viewpoint of, for example, securing the battery capacity. A content of the composite oxides (A) and (B) is desirably 0.1 mass%~15 mass% with respect to the mass of the composite oxides (A), (B), and (C), more desirably 0.5 mass%~15 mass%, further desirably 1 mass%~15mass%, and particularly desirably 1 mass%~10 mass%. When the amount of the composite oxides (A) and (B) is within these ranges, a sufficient amount of Li ions for compensating for the irreversibility of the negative electrode 12 during the initial charging is supplied from the positive electrode 11, resulting in suppression of the reduction of the capacity maintenance rate and also, suppression of the increase in the resistance can be effectively suppressed.

The positive electrode mixture layer 31 may further include a composite oxide other than the composite oxides (A), (B), and (C) (for example, a lithium-transition metal composite oxide which does not satisfy the general formulae described above) within a range which does not adversely affect the advantages of the present disclosure. Desirably, the composite oxides (A), (B), and (C) are contained in an amount of greater than or equal to 50 mass% with respect to the total mass of the positive electrode mixture layer 31. A lower limit value of a total content of the composite oxides (A), (B), and (C) with respect to the total mass of the positive electrode mixture layer 31 is desirably greater than or equal to 85 mass%, more desirably greater than or equal to 90 mass%, and particularly desirably greater than or equal to 95 mass%. An upper limit value of the total content of the composite oxides (A), (B), and (C) with respect to the total mass of the positive electrode mixture layer 31 is, for example, 99 mass%.

[First Lithium-Transition Metal Composite Oxide (Composite Oxide (A))]

As described above, the composite oxide (A) is a composite oxide represented by a general formula $Li_aNi_bM1_{1-b}O_2$ (wherein $1.5\leq a\leq2.5$, $0.95\leq b\leq1.00$, and M1 is at least one element selected from the group consisting of Cu, Sr, Ca, Nb, Si, and Al). A content of the metal element M1 is smaller than contents of Li and Ni, is less than or equal to 5 mol% with respect to a total molar amount of metal elements other than Li, and may be substantially 0 mol%. A composition of the composite oxide (A) can be analyzed through ICP emission spectroscopy.

The composite oxide (A) has pores in the inside thereof, and a porosity of the composite oxide (A) is 2%~10%. With such a configuration, the battery capacity of the non-aqueous electrolyte secondary battery 10 can be improved. Although the details of the mechanism are yet unknown, it can be deduced that, when the composite oxide (A) has pores in the inside thereof, a crystalline structure change during the initial charging can be induced more easily, and the amount of Li to be released is increased. When the porosity of the composite oxide (A) is less than 2%, the crystalline structure change of the composite oxide (A) cannot be induced, and the amount of Li to be released is not sufficient. When the porosity of the composite oxide (A) exceeds 10%, the composite oxide (A) becomes bulky, the advantage due to the increase in the amount of Li to be released is cancelled out by reduction of a density of the positive electrode mixture layer 31, and the battery capacity is either not increased at all, or, in some cases, is even reduced.

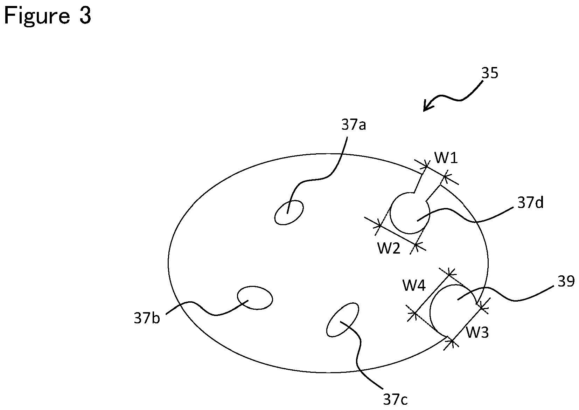

The pores inside the composite oxide (A) will now be described with reference to FIG. 3. FIG. 3 is a diagram schematically showing a cross section of the composite oxide (A). The composite oxide (A) is, for example, a secondary particle 35 resulting from aggregation of a plurality of primary particles. A volume-based median size (D50) of the composite oxide (A) is desirably 1 $\mu$m~15 $\mu$m, and more desirably 1 $\mu$m~10 $\mu$m. D50 means a particle size at which an accumulation of frequencies in a volume-based particularity distribution reaches 50% from the lower side of the particle size, and is also called a middle size. The particularity distribution of the secondary particle of the composite oxide can be measured using a particularity distribution measurement apparatus of a laser diffraction type (for example, MT3000II manufactured by MicrotracBEL corporation), with water as a dispersive medium. A particle size of the primary particle of the composite oxide (A) is, for example, 0.05 $\mu$m~1 $\mu$m. The particle size of the primary particle is measured as a diameter of a circumscribing circle in a cross-sectional image of the secondary particle observed by a scanning electron microscope (SEM). A BET specific surface area of the composite oxide (A) is, for example, 0.5 m$^2$/g~2.5 m$^2$/g. The BET specific surface area is measured according to the BET method (nitrogen adsorption method) described in JIS R1626 standards.

The secondary particle 35 shown in FIG. 3 has pores 37a, 37b, 37c, and 37d in the inside thereof. The pores 37a, 37b, and 37c are not connected to the outside of the secondary particle 35, and are present in a closed state inside the secondary particle 35. The pore 37d is connected to the outside at an outer edge of the secondary particle 35, and a width W1 at the outer edge of the secondary particle 35 and a maximum width W2 of the pore 37d in a direction parallel to the width W1 satisfy a relationship of W1/W2≤0.9. A recess 39 is connected to the outside at the outer edge of the secondary particle 35, but, because a width W3 at the outer edge of the secondary particle 35 and a maximum width W4 of the recess 39 in a direction parallel to the width W3 are in a relationship of W3/W4>0.9, the recess 39 is not a pore. As described, in the present specification, the pore refers to a pore which is present in a closed state inside the secondary particle 35, or a pore which is connected to the outside at the outer edge of the secondary particle 35 and in which a width $W_o$ at the outer edge of the secondary particle 35 and a maximum width $W_m$ of the pore in a direction parallel to the width $W_o$ satisfy a relationship of $W_o/W_m \leq 0.9$.

The porosity of the composite oxide (A) can be calculated, for example, as follows.

<Method of calculating Porosity of Composite Oxide (A)>

(1) A cross section of the secondary particle 35 is exposed. As a method of exposing the cross section, for example, a method may be employed in which the secondary particle 35 is embedded in a resin, and machined with an ion milling apparatus (for example, IM4000PLUS manufactured by Hitachi High-Tech Corporation), and the cross section of the secondary particle 35 is exposed.

(2) Using a scanning electron microscope (SEM), a backscattered electron image of the exposed cross section of the secondary particle 35 is captured.

(3) A cross-sectional image acquired by the above-described process is read into a computer, a binarization process is applied using an image analyzing software (such as, for example, ImageJ manufactured by National Institutes of Health), and a binarized image is acquired in which a pores existing in the particle cross section is converted into white color and a regions other than the pores among the region surrounded by the outer edges of the secondary particle 35 is converted into black color. In this process, a correction is applied to distinguish between the pore 37d and the recess 39, as shown in FIG. 3.

(4) From the binarized image, an area of the pores and an area of the secondary particle cross section (a sum of areas of white and black colors) are calculated. The porosity can be calculated based on the following equation.

$$\text{Porosity} = (\text{Area of pores})/(\text{area of secondary particle cross section}) * 100$$

(5) The above-described measurement is performed for 10 secondary particles 35 included in the same composite oxide (A), and an average value of the porosities calculated for the 10 secondary particles is set as the porosity of the composite oxide (A).

The composite oxide (A) supplies, to the negative electrode 12, Li ions for compensating for the irreversibility of the negative electrode active material during the initial charging, so as to suppress reduction of the capacity maintenance rate. In addition, for example, the composite oxide (A) releases Li during the initial charging, and changes to LiNiO$_2$ having a high activity. Due to a side reaction between LiNiO$_2$ and the electrolyte, degradation of the composite oxide (A) and deposition of decomposition products on the negative electrode 12 may occur, resulting in an increase of the battery resistance, but the increase in the resistance is effectively suppressed by an effect of the composite oxide (B).

The composite oxide (A) has, for example, a crystal structure belonging to a space group Immm, at least before the initial charging and discharging. In addition, the composite oxide (A) has a composition represented by a general formula Li$_a$Ni$_b$M1$_{1-b}$O$_2$ (0.5≤a≤1.5) after the initial charging and discharging. The composite oxide (A) releases and occludes a certain amount of Li during the charging and discharging even after the initial charging and discharging, but desirably, in order to secure the battery capacity, the composite oxide (C) is added. The composite oxide (A) may include a plurality of types of composite oxides having similar compositions, and may include a compound which does not satisfy the above-described general formula, for example, $Li_2O$ and $NiO$.

The composite oxide (B) exists in the positive electrode mixture layer 31, for example, in a state of being surrounded by a plurality of composite oxides (A). Particle surfaces of the composite oxides (A) and (B) contact each other. In this case, the interaction between the composite oxides (A) and (B) is more effectively realized, and the suppression advantage of the increase in the resistance can be considered to be improved. The composite oxide (B) is not limited to that which is intentionally added, and may alternatively be a by-product of other composite oxides or other substances mixed as an impurity for the positive electrode material.

The composite oxide (A) is produced, for example, through a first step in which a predetermined amount of a Li material and a predetermined amount of a Ni material are mixed to obtain a mixture, and a second step in which the mixture is baked at a temperature of 500°C~800°C for 10 hours~30 hours. In the first step, the materials may be ground as necessary, and a material containing the metal element M1 may be added within the range satisfying the above-described general formula. In addition, in the second step, the baking may be performed after the mixture is shaped in a pellet form, or a shredding process may be applied after the baking. The baking of the second step is performed, for example, under an inert gas atmosphere such as nitrogen.

No particular limitation is imposed on a method of adjusting the porosity of the composite oxide (A), and the porosity of the composite oxide (A) may be adjusted, for example, by a ratio of the Li material with respect to the Ni material, a particle size and purity of the material, an amount of addition of the metal element M1, a density of the pellet, a baking profile, and a baking time. Within the range of not obstructing the synthesis reaction of the composite oxide (A), the porosity can be adjusted to be higher with a smaller ratio of the Li material with respect to the Ni material, a larger material particle size, a lower material purity, a larger amount of addition of the metal element M1, a lower pellet density (or no shaping at all), or a shorter baking time.

As examples of the Li material, there may be exemplified $Li_2CO_3$, $LiOH$, $Li_2O_2$, $Li_2O$, $LiNO_3$, $LiNO_2$, $Li_2SO_4$, $LiOH \cdot H_2O$, $LiH$, $LiF$, and the like. As examples of the Ni material, there may be exemplified $NiO$, $Ni(OH)_2$, $NiCOs$, $NiSO_4$, $Ni(NO_3)_2$, and the like. As the M1 material, there may be exemplified an oxide, a hydroxide, a carbonate, a nitrate, a sulfate, or the like of M1. A mixture ratio of the materials is adjusted so that the composition of the composite oxide (A) satisfies the above-described general formula. For example, $Li_2O$ and $NiO$ are mixed with a molar ratio of Li with respect to Ni being 2-2.1, to obtain $Li_2NiO_2$.

As described above, the composite oxide (A) may include $Li_2O$ and $NiO$. For example, when $Li_2O$ and $NiO$ are used as materials, these materials may be contained in the composite oxide (A) as an unreacted component. In addition, when the composite oxide (A) and N-methyl pyrrolidone (NMP) are mixed with a mass ratio of 0.1:20, stirred, and stored at the room temperature for 24 hours, an amount of Li extracted by NMP is desirably less than or equal to 100 $\mu$mol/g. With this method, the amount of Li contained in the composite oxide (A) and existing in a state of being easily extracted by NMP can be measured. When the amount of Li extracted by NMP exceeds 100 $\mu$mol/g, a property of the positive electrode mixture slurry may be degraded.

[Second Lithium-Transition Metal Composite Oxide (Composite Oxide (B))]

As described above, the composite oxide (B) is a composite oxide represented by $Li_cNi_{2-c-d}M2_dO_2$ (wherein $0<c\leq0.5$, $0\leq d\leq0.5$, and M2 is at least one metal element other than Li and Ni). A content of the metal element M2 is desirably lower than the contents of Li and Ni, and is, for example, less than 10 mol% with respect to a total molar amount of the metal elements, or less than 5 mol%. As an example of the metal element M2, there may be exemplified at least one element selected from the group consisting of Cu, Sr, Ca, Nb, Si, and Al.

In the composite oxide (B), release and occlusion of Li do not occur during the charging and discharging, and the composition does not change. The composite oxide (A) which has released Li during the initial charging has a high activity, and may react with the electrolyte, resulting in an increase in the resistance of the battery, but when the composite oxide (B) is used in combination with the composite oxide (A), the increase in the resistance of the battery can be specifically suppressed. Although the mechanism of the suppression of the increase in the resistance by the combinational use of the two types of composite oxides is yet unknown, it can be deduced that the composite oxide (B) protects the particle surface of the composite oxide (A), and suppresses the side reaction between the composite oxide (A) and the electrolyte after the release of Li. The composite oxide (B) may include a plurality of types of composite oxides having similar compositions. The parameter c in the above-described general formula more desirably satisfies a condition of $0.1\leq c\leq0.5$, or a condition of $0.2\leq c\leq0.4$. When the parameter c is within these ranges, the increase in the resistance is more effectively suppressed. The composition of the composite oxide (B) can be identified from an X-ray diffraction pattern, or analyzed through the ICP emission spectroscopy.

The composite oxide (B) is a composite oxide, for example, having at least one diffraction peak having a peak top at a diffraction angle ($2\theta$) of 21.40°~21.65° in radiation X-ray diffraction (with a light energy of 16 keV). The diffraction peak may be any peak that has a peak top in a range of $2\theta = 21.40°\sim21.65°$, and may be a broad peak which does not have the entirety of the peak within this range. In the X-ray diffraction pattern of the composite oxide (B), for example, one peak top exists in a range of $2\theta = 21.40°\sim21.65°$.

The X-ray diffraction pattern of the composite oxide (B) is obtained through powder X-ray diffraction under the following conditions, using a radiation facility (beam line BL5S2 of Aichi Synchrotron Radiation Center).

Light Energy: 16 keV
Scan range: 10°~90°
Analyzing Optical System: Debye-Scherrer type

Peak search is applied on the obtained data using an identifying and analyzing software PDXL (manufactured by Rigaku Corporation), to identify the composite oxide (B). In the measurement by the above-described apparatus, NiO has a peak at 21.36°, and the peak shifts to a higher angle side as the parameter c in the above-described general formula increases. When the parameter c in the above-described general formula is within the above-described range, a main peak exists in 21.49°~21.65°. The composite oxide (B) can be identified by referencing with the JCPDS card, including other peaks.

The composite oxide (B) is, for example, a secondary particle having a smaller particle size than the composite oxide (A) and resulting from aggregation of a plurality of primary particles. D50 of the composite oxide (B) is desirably 1 $\mu$m~15 $\mu$m, more desirably 1 $\mu$m~10 $\mu$m, and is particularly desirably 2 $\mu$m~7 $\mu$m. By setting the particle size of the composite oxide (B) to be smaller than the particle size of the composite oxide (A), a superior contact state of the particles can be realized, and the suppression advantage of the increase in the resistance can be improved. The BET specific surface area of the composite oxide (B) is, for example, 0.5 m$^2$/g~2.5 m$^2$/g.

The composite oxide (B) exists in the positive electrode mixture layer 31 in a state of, for example, being surrounded by a plurality of the composite oxides (A). Particle surfaces of the composite oxides (A) and (B) contact each other. In this case, it can be considered that the interaction between the composite oxides (A) and (B) can be more effectively realized, and the suppression advantage of the increase in the resistance can be improved. The composite oxide (B) is not limited to a material which is intentionally added, and may alternatively be a by-product of other composite oxides, or other substances mixed as an impurity of the positive electrode material.

The composite oxide (B) is produced, for example, through a first step in which a predetermined amount of a Li material and a predetermined amount of a Ni material are mixed to obtain a mixture, and a second step in which the mixture is baked at a temperature of 500°C~800°C for 10 hours~30 hours. In the first step, the materials may be ground as necessary, and a material containing the metal element M2 may be added within a range in which the X-ray diffraction pattern of the composite oxide (B) satisfies the above-described condition. In addition, in the second step, the baking may be performed after the mixture is shaped in a pellet form, or a shredding process may be applied after the baking. The baking of the second step is performed, for example, in the atmosphere or under an oxygen atmosphere.

As examples of the Li material, there may be exemplified $Li_2CO_3$, LiOH, $Li_2O_2$, $Li_2O$, $LiNO_3$, $LiNO_2$, $Li_2SO_4$, $LiOH \cdot H_2O$, LiH, LiF, and the like. As examples of the Ni material, there may be exemplified NiO, $Ni(OH)_2$, $NiCO_3$, $NiSO_4$, $Ni(NO_3)_2$, and the like. A mixture ratio of the Li material and the Ni material is adjusted, for example, such that the X-ray diffraction pattern of the composite oxide (B) satisfies the above-described condition and the parameter c in the above-described general formula satisfies the condition of $0<c\leq0.5$.

[Third Lithium-Transition Metal Composite Oxide (Composite Oxide (C))]

The composite oxide (C) is a composite oxide represented by the above-described general formula $Li_xNi_{1-y-z}Co_yM3_zO_2$ (wherein $0.97\leq x\leq1.2$, $0\leq y\leq0.2$, $0<z\leq0.5$, and M3 is at least one element selected from the group consisting of Mn, W, Mg, Mo, Nb, Ti, Si, Al, and Zr), and contains, as a necessary constituent element, at least one metal element M3 selected from the group consisting of Mn, W, Mg, Mo, Nb, Ti, Si, Al, and Zr). Further, desirably, the composite oxide (C) contains Co. However, because Co is particularly rare and expensive, the composite oxide (C) may include substantially no Co. When the composite oxide (C) contains Co, the Co content is desirably less than or equal to 20 mol% with respect to a total molar amount of metal elements other than Li, more desirably 0.1 mol%~10 mol%, and particularly desirably 0.5 mol%~5 mol%. A molar fraction of the metal element in the composite oxide can be measured through inductively coupled plasma (ICP) emission spectroscopy.

Desirably, in the composite oxide (C), a content of Ni is the largest among the metal elements other than Li. The Ni content is desirably greater than or equal to 50 mol% with respect to a total molar amount of the metal elements other than Li, desirably greater than or equal to 70 mol%, and particularly desirably greater than or equal to 80 mol%. A desirable example of the Ni content is 80 mol%~97 mol%, or 85 mol%~95 mol%. That is, a desirable example of (1-y-z) indicating the Ni content in the above-described general formula is $0.80\leq(1-y-z)\leq0.97$, or $0.85\leq(1-y-z)\leq0.95$.

As described above, a desirable example of the composite oxide (C) is a composite oxide containing Ni in an amount of greater than or equal to 80 mol% with respect to the total molar amount of the metal elements other than Li. By increasing the percentage of Ni among the metal elements in the composite oxide (C), a higher capacity of the battery can be achieved. Further, a Ni-rich composite oxide (C) is well compatible with the composite oxide (B), and is effective also from the viewpoint of improving the cycle characteristic. A parameter x indicating the Li content in the above-described general formula satisfies a condition of $0.8 < x < 1.2$, or a condition of $0.97 < x < 1.2$, and the composite oxide (C) may be a lithium-excess composite oxide in which the molar ratio of Li with respect to the transition metal exceeds 1.

The composite oxide (C) contains at least one metal element M3 selected from the group consisting of Mn, W, Mg, Mo, Nb, Ti, Si, Al, and Zr. The metal element M3 desirably contains at least one of Mn and Al. A content of the metal element M3, or a total content of the metal elements M3 when there are a plurality of elements, is desirably less than or equal to 50 mol% with respect to the total molar amount of the metal elements other than Li, more desirably 0.1 mol%~20 mol%, futher desirably 0.5 mol%~10 mol%, and particularly desirably 1 mol%~10 mol%.

The composite oxide (C) has, for example, a crystal structure belonging to a space group R-3m. The composite oxide (C) further has a layer structure including a transition metal layer, a Li layer, and an oxygen layer. In this case, the functions of the composite oxides (A) and (B) more effectively act, and a stable crystal structure is maintained even after repetitions of charging and discharging. The composite oxide (C) is, for example, a secondary particle, resulting from aggregation of a plurality of primary particles. D50 of the composite oxide (C) is desirably 3 $\mu$m~20 $\mu$m, and more desirably 5 $\mu$m~15 $\mu$m. A particle size of the primary particle of the composite oxide (C) is, for example, 0.05 $\mu$m~ 1 $\mu$m. In addition, the BET specific surface area of the composite oxide (C) is, for example, 0.2 m$^2$/g~2.0 m$^2$/g.

On the particle surface of the composite oxide (C), a compound containing at least one element selected from the group consisting of Sr, Ca, W, Mg, Nb, Al, B, and Zr (hereinafter also referred to as a "metal element M4") may be adhered. An M4 compound containing the metal element M4 may be interspersed among the particle surface of the composite oxide (C), or may exist in a layer form covering the entirety of the particle surface. A thickness of the layer of the M4 compound is, for example, 0.1 nm~5 nm. The M4 compound may be considered to protect the surface of the composite oxide (C) and also protect the surfaces of the composite oxides (A) and (B). With such a configuration, side reactions of the electrolyte at the particle surfaces of the composite oxides (A), (B), and (C) can be suppressed.

The M4 compound is an oxide, a hydroxide, or a carbonate. Specific examples of the M4 compound include SrO, CaO, Sr(OH)$_2$, Ca(OH)$_2$, SrCO$_3$, CaCO$_3$, and the like. An amount of the M4 compound is, for example, 0.05 mol%~1.0 mol% in the metal element M4 equivalence, with respect to the total molar amount of the metal elements other than Li forming the composite oxide (C). The existence of the M4 compound can be checked through energy dispersive X-ray spectroscopy (TEM-EDX). In addition, the metal element M4 can be measured through the ICP emission spectroscopy of a solution in which the composite oxide (C) is dissolved in fluonitric acid.

The composite oxide (C) is produced, for example, through a first step in which a composite oxide including Ni, the metal element M3, and the like is obtained, a second steep in which the composite oxide and a Li material are mixed to obtain a mixture, and a third step in which the mixture is baked. When the M4 compound is to be adhered to the particle surface of the composite oxide (C), a material including the metal element M4 (hereinafter, also referred to as an "M4 material") may be added in the second step. The compositions, the particle sizes, the BET specific surface areas, and the like of the composite oxide (C) and the M4 compound can be adjusted by controlling the mixture ratio of the materials, the baking condition in the third step, and the like.

In the first step, for example, while a solution of metal salts including metal elements such as Ni, the metal element M3, and the like is stirred, an alkali solution such as sodium hydroxide is dropped to adjust the pH to the alkali side (for example, 8.5-12.5), so that a composite hydroxide including the metal elements is precipitated (coprecipitated). Then, the composite hydroxide is baked, to obtain a composite oxide including Ni, the metal element M3, and the like. No particular limitation is imposed on the baking temperature, and the temperature is, for example, 300~600°C.

In the second step, the composite oxide obtained in the first step, the Li material, and the M4 material as necessary are mixed to obtain a mixture. Examples of the Li material include Li$_2$CO$_3$, LiOH, Li$_2$O$_2$, Li$_2$O, LiNO$_3$, LiNO$_2$, Li$_2$SO$_4$, LiOH·H$_2$O, LiH, LiF, and the like. Examples of the M4 material include an oxide, a hydroxide, a carbonate, a nitrate, a sulfate, or the like of M4. A mixture ratio between the composite oxide obtained in the first step and the Li material is adjusted, for example, such that a molar ratio of metal elements other than Li to Li is 1:0.98~1:1.22. A mixture ratio between the composite oxide and the M4 material is adjusted, for example, such that a molar ratio of the metal elements other than Li to M4 is 1:0.0005~1:0.01.

In the third step, the mixture obtained in the second step is baked at a predetermined temperature and for a predetermined time to obtain a baked product. The baking of the mixture is performed through a multi-stage baking including, for example, a first baking step in which the mixture is baked in a baking furnace under an oxygen air flow at a first temperature increasing rate to a first setting temperature of greater than or equal to 450°C and lower than or equal to 680°C, and a second baking step in which the mixture is baked in the baking furnace under the oxygen air flow at a second temperature increasing rate to a second setting temperature of greater than 680°C and lower than or equal to 800°C. The first temperature increasing rate is 1.5°C/min~5.5°C/min, and the second temperature increasing rate is slower than the first temperature increasing rate and may be 0.1°C/min~3.5°C/min. Alternatively, a plurality of the temperature increasing rates may be set for each baking step.

A retention time of the first setting temperature in the first baking step is desirably 0 hour~5 hours, and is more desirably 0 hour~3 hours. The retention time of the setting temperature refers to a time period in which, after the setting temperature is reached, the setting temperature is maintained. The retention time of the second setting temperature in the second baking step is desirably 1 hour~10 hours, and more desirably 1 hour~5 hours. The baking of the mixture may be performed in an oxygen air flow with an oxygen concentration of greater than or equal to 60%, and with a flow rate of the oxygen air flow of 0.2 mL/min~4 mL/min per 10 cm$^3$ of the baking furnace, and greater than or equal to 0.3 L/min per 1 kg of the mixture. Water washing, dehydration, and drying may be applied to the baked product, to remove impurities.

Alternatively, a process may be employed in which the M4 material is not added in the second step, the M4 material is added during the water washing or the drying of the baked product in the third step, and a thermal treatment may be applied under vacuum atmosphere, at 150°C~400°C, and for 0.5 hours~15 hours, to adhere the M4 compound over the particle surface of the composite oxide (C).

<Negative Electrode>

As shown in FIG. 2, the negative electrode 12 comprises a negative electrode core 40 and a negative electrode mixture layer 41 formed over at least one surface of the negative electrode core 40. For the negative electrode core 40, there may be employed a foil of metal stable within a potential range of the negative electrode 12 such as copper, a copper alloy, or the like, a film on a surface layer of which the metal is placed, or the like. The negative electrode mixture layer 41 includes a negative electrode active material and a binder agent, and is desirably formed over both surfaces of the negative electrode core 40. In addition, a conductive agent may be added to the negative electrode mixture layer 41. The negative electrode 12 can be produced by applying a negative electrode mixture slurry including the negative electrode active material, the binder agent, or the like over the negative electrode core 40, drying the applied film, and compressing the dried film, to form the negative electrode mixture layer 41 over both surfaces of the negative electrode core 40.

The negative electrode mixture layer 41 includes, as a negative electrode active material, a carbon-based active material, and at least one of at least one element selected from the group consisting of Si, Sn, Sb, Mg, and Ge (hereinafter also referred to as a "metal element M5") and an M5 compound containing the metal element M5. Contents of the metal element M5 and the M5 compound are desirably 0.5 mass%~30 mass% with respect to a total mass of the negative electrode active material, and more desirably 1 mass%~15 mass%.

To the negative electrode mixture layer 41, the metal element M5 may be added, but desirably, the M5 compound is added. Examples of the M5 compound include SiC, SnO$_2$, a first silicon material (SiO) containing a silicon oxide phase and Si dispersed in the silicon oxide phase, a second silicon material (LSX) containing a lithium silicate phase and Si dispersed in the lithium silicate phase, and a third silicon material (Si-C) containing a carbon phase and Si dispersed in the carbon phase. Of these, SiO, LSX, or Si-C is desirable.

As the carbon-based active material, there may be employed, for example, a natural graphite such as flake graphite, or an artificial graphite such as massive artificial graphite, graphitized meso-phase carbon microbeads, or the like. A content of the carbon-based active material (graphite) is desirably 70 mass%~99.5 mass% with respect to the mass of the negative electrode active material, and more desirably 85 mass%~99 mass%. In addition, D50 of the carbon-based active material is desirably 1 $\mu$m~20 $\mu$m, and more desirably 2 $\mu$m~15 $\mu$m. By using the carbon-based active material and the M5 compound in combination, a higher capacity can be realized while maintaining a superior cycle characteristic.

SiO and LSX are, for example, particles with D50 smaller than D50 of the graphite. D50 of SiO and LSX is desirably 1 $\mu$m~15 $\mu$m, and more desirably 3 $\mu$m~10 $\mu$m. On the particle surface of SIO and LSX, a conductive layer formed from a material having a high electrical conductivity may be formed. A desirable example of the conductive layer is a carbon coating formed from a carbon material. A thickness of the conductive layer is desirably 1 nm~200 nm in consideration of securing the electrical conductivity and diffusibility of the Li ions to the inside of the particle, and more desirably 5 nm~100 nm.

SiO has a particle structure in which fine Si particles are dispersed in a silicon oxide phase. Desirably, SiO has a sea-island structure in which fine Si particles are dispersed approximately uniformly in a matrix of amorphous silicon oxide, and is represented by a general formula SiO$_x$ (0<x≤2). The silicon oxide phase is formed by a group of particles finer than the Si particles. A content of the Si particles is desirably 35 mass%~75 mass% with respect to a total mass of SiO, from the viewpoint of realizing both a high battery capacity and superior cycle characteristic.

An average particle size of Si particles dispersed in the silicon oxide phase is, for example, smaller than or equal to 500 nm before charging and discharging, and desirably smaller than or equal to 200 nm, or smaller than or equal to 50 nm. After the charging and discharging, the average particle size is, for example, smaller than or equal to 400 nm, or smaller than or equal to 100 nm. The average particle size of the Si particles is determined by observing a particle cross section of SiO using the SEM or a transmission electron microscope (TEM), and as an average value of a largest size of 100 Si particles (this is similarly applicable to LSX and Si-C).

LSX has a particles structure in which fine Si particles are dispersed in a lithium silicate phase. Desirably, LSX has a sea-island structure in which fine Si particles are dispersed approximately uniformly in a matrix of lithium silicate. The lithium silicate phase is formed from a group of particles finer than the Si particles. Similar to the case of SiO, a content of the Si particles is desirably 35 mass%~75 mass% with respect to a total mass of LSX. The average particle size of the Si particles is, for example, smaller than or equal to 500 nm before charging and discharging, and desirably smaller than or equal to 200 nm, or smaller than or equal to 50 nm.

The lithium silicate phase is desirably formed from a compound represented by a general formula $Li_{2z}SiO_{(2+z)}$ (0<z<2). That is, the lithium silicate phase does not include $Li_4SiO_4$ (Z=2). $Li_4SiO_4$ is an unstable compound, shows an alkaline characteristic when reacting with water, and may alter Si, resulting in reduction of the charge/discharge capacity. Desirably, the lithium silicate phase has $Li_2SiO_3$ (Z=1) or $Li_2Si_2O_5$ (Z=1/2) as a primary component, from the viewpoints of stability, ease of production, Li ion conductivity, and the like. When $Li_2SiO_3$ or $Li_2Si_2O_5$ is employed as the primary component, a content of the primary component is desirably greater than 50 mass% with respect to a total mass of the lithium silicate phase, and more desirably greater than or equal to 80 mass%.

Si-C has a carbon phase and Si particles dispersed in the carbon phase. A content of Si particles in Si-C is desirably greater than or equal to 30 mass% and less than or equal to 80 mass% from the viewpoint of higher capacity, desirably greater than or equal to 35 mass% and less than or equal to 75 mass%, and more desirably greater than or equal to 55 mass% and less than or equal to 70 mass%. An average particle size of Si particles is in general smaller than or equal to 500 nm before charging and discharging, desirably smaller than or equal to 200 nm, and more desirably smaller than or equal to 100 nm. After the charging and discharging, the average particle size is desirably smaller than or equal to 400 nm, and more desirably smaller than or equal to 100 nm.

As the binder agent included in the negative electrode mixture layer 41, similar to the case of the positive electrode 11, a fluororesin, PAN, polyimide, an acrylic resin, polyolefin, or the like may be employed, but particularly desirably, styrene-butadiene rubber (SBR) is employed. Desirably, the negative electrode mixture layer 41 further contains CMC or a salt thereof, polyacrylic acid (PAA) or a salt thereof, polyvinyl alcohol (PVA), or the like. Of these, desirably, SBR, CMC or a salt thereof, and PAA or a salt thereof are used in combination. A content of the binder agent is, for example, 0.1 mass%~5 mass% with respect to the mass of the negative electrode active material.

<Separator>

As shown in FIG. 2, the separator 13 includes a porous base member 50, and a surface layer 51 formed over a surface, of the surfaces of the base member 50, facing the side of the positive electrode 11. The surface layer 51 is a layer including inorganic particles and a binder agent. The surface layer 51 may be formed over both surfaces of the base member 50, but from the viewpoint of higher capacity or the like, the surface layer 51 is desirably formed over only one surface of the base member 50, facing the side of the positive electrode 11. The separator 13 is a porous sheet which interposes between the positive electrode 11 and the negative electrode 12, and which prevents electrical contact between the electrodes, and has ion permeability and insulating property. A porosity of the separator 13 is, for example, 30%~70%. The porosity of the separator 13 is determined by a porosity of the base member 50.

The base member 50 is a porous sheet made of a resin. A thickness of the base member 50 is desirably 5 μm~50 μm, and more desirably 10 μm~30 μm. No particular limitation is imposed on the resin forming the base member 50, and specific examples include polyethylene, polypropylene, polyolefin such as a copolymer of ethylene and α-olefin, polyethylene terephthalate, polybutylene terephthalate, polyphenylene sulfide, polyetherether ketone, polyimide, fluororesin, cellulose, or the like. The base member 50 may have a single-layer structure or a layered structure such as a three-layered structure of polyethylene/polypropylene/polyethylene.

The surface layer 51 is porous similar to the base member 50, and has ion permeability and insulating characteristic. No particular limitation is imposed on a thickness of the surface layer 51, but the thickness is desirably thinner than the thickness of the base member 50, and is, for example, 0.5 μm~10 μm, and more desirably, 1 μm~6 μm. The surface layer 51 is in contact with the surface of the positive electrode mixture layer 31, and is desirably formed over approximately the entire region of one surface of the base member 50. The surface layer 51 can be formed, for example, by applying a slurry including an inorganic particle and a binder agent over an entire surface of the base member 50, and drying the applied film.

The surface layer 51 is a layer having the inorganic particles as a primary component. A content of the inorganic particles is desirably greater than or equal to 70 mass% with respect to a total mass of the surface layer 51, and more desirably greater than or equal to 80 mass%. A range of the content of the inorganic particles is desirably 70 mass%~99 mass%, more desirably 80 mass%~98 mass%, and particularly desirably 85 mass%~95 mass%. The surface layer 51 has functions to suppress damages of the separator 13 due to conductive foreign objects, to suppress deformation of the separator 13 during abnormal heat generation, and the like. Further, it can be deduced that the surface layer 51 in contact with the positive electrode 11 suppresses the side reaction of the electrolyte at the positive electrode 11 through an interaction with the composite oxide (B). By providing the surface layer 51, the cycle characteristic and storage characteristic of the battery can be specifically improved.

As the inorganic particles included in the surface layer 51, there may be exemplified particles such as metal oxides, metal nitrides, metal fluorides, metal carbides, metal hydroxides such as aluminum hydroxide (boehmite) and magnesium hydroxide, metal carbonates such as calcium carbonate, magnesium carbonate, and barium carbonate, metal sulfates such as calcium sulfate, magnesium sulfate, and barium sulfate, and the like. As the inorganic particles, one material may be used as a single material, or two or more material may be used in combination. D50 of the inorganic particles is desirably 0.01 $\mu$m~10 $\mu$m, and more desirably 0.05 $\mu$m~5 $\mu$m.

Examples of the metal oxides include aluminum oxide (alumina), titanium oxide, magnesium oxide, zirconium oxide, nickel oxide, silicon oxide, and manganese oxide. Examples of the metal nitrides include titanium nitride, boron nitride, aluminum nitride, magnesium nitride, and silicon nitride. Examples of the metal fluorides include aluminum fluoride, lithium fluoride, sodium fluoride, magnesium fluoride, calcium fluoride, and barium fluoride. Examples of the metal carbides include silicon carbide, boron carbide, titanium carbide, and tungsten carbide. From the viewpoints of improvements of cycle characteristic and storage characteristic, a desirable example of the inorganic particles is at least one material selected from alumina, boehmite, and barium sulfate.

No particular limitation is imposed on the binder agent included in the surface layer 51 so long as the binder agent can adhere the inorganic material together, can adhere the inorganic particles with respect to the base member 50, and has an electrolyte endurance, and, for example, a binder agent similar to those used for the positive electrode mixture layer 31 and the negative electrode mixture layer 41 may be employed. Specific examples include a fluororesin such as PVDF and PTFE, PAN, an acrylic resin, and the like. Alternatively, a resin having a high thermal endurance such as an aramid resin may be employed. A desirable example of the binder agent is at least one material selected from the aramid resin and the acrylic resin.

<Non-aqueous Electrolyte>

The non-aqueous electrolyte includes a non-aqueous solvent and an electrolyte salt dissolved in the non-aqueous solvent. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine. Examples of the halogen-substituted product include a fluorinated cyclic carbonate such as fluoroethylene carbonate (FEC), a fluorinated chain carbonate, or a fluorinated chain carboxylate such as fluoromethyl propionate (FMP). The non-aqueous electrolyte is not limited to a liquid electrolyte, and may alternatively be a solid electrolyte.

The non-aqueous electrolyte includes a sulfonyl imide salt as the electrolyte salt. It can be deduced that, in the non-aqueous electrolyte secondary battery 10 having the positive electrode 11 including the composite oxides (A) and (B) or the composite oxides (A), (B), and (C), by adding the sulfonyl imide salt to the non-aqueous electrolyte, a superior protective coating may be formed on the particle surface of the positive electrode active material, suppressing the side reaction of the electrolyte at the particle surface, and the cycle characteristic is specifically improved. A concentration of the sulfonyl imide salt is desirably 0.05 mol/L~2.5 mol/L, more desirably 0.1 mol/L~2.0 mol/L, and particularly desirably 0.1 mol/L~1.5 mol/L. When the content of the sulfonyl imide salt is within these ranges, the cycle characteristic can be more effectively improved.

The sulfonyl imide salt added to the non-aqueous electrolyte is desirably lithium sulfonyl imide. As the lithium sulfonyl imide, there may be exemplified, for example, lithium bis(fluorosulfonyl)imide (LiFSI), lithium bis(trifluoromethane sulfonyl)imide, lithium bis(nonafluorobutane sulfonyl)imide, lithium bis(pentafluoroethane sulfonyl)imide )LIBETI), and the like. Of these, at least one lithium sulfonyl imide selected from LiFSI and lithium bis(trifluoromethane sulfonyl)imide is desirable. As the sulfonyl imide salt, one material may be used as a single material, or two or more materials may be used in combination.

The non-aqueous electrolyte may further include other lithium salts. Examples of the other lithium salts include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (wherein $1<x<6$, n is 1 or 2), $LiB_{10}Cl_{10}$, LiCl, LiBr, LiI, lithium chloroborane, lithium lower aliphatic carboxylate, borate salts such as $Li_2B_4O_7$ and $Li(B(C_2O_4)F_2)$, and the like. Of these, from viewpoints of ion conductivity, electrochemical stability, and the like, $LiPF_6$ is desirably employed.

In the non-aqueous electrolyte, desirably, lithium sulfonyl imide and a second lithium salt co-exist. In this case, a combination of LiFSI and $LiPF_6$ is particularly desirable. A concentration of lithium sulfonyl imide is adjusted, for example, to the above-described range even when the second lithium salt is included. As a specific example, the concentration of lithium sulfonyl imide is set to 0.1 mol/L~1.5 mol/L, and a total concentration of the lithium salts is set to 1.5 mol/L~2.5 mol/L. The concentration of lithium sulfonyl imide is, for example, 30%~70% of the concentration of the lithium salts included in the non-aqueous electrolyte.

Further, the non-aqueous electrolyte may contain additives such as vinylene carbonate (VC), ethylene sulfite (ES), cyclohexyl benzene (CHB), ortho-terphenyl (OTP), and a propane sultone-based compound. In particular, VC is desirably added from the viewpoint of higher capacity. No particular limitation is imposed on a concentration of the additive, and the concentration is, for example, 0.1 mass%~5 mass%.

As described above, esters and ethers are used for the non-aqueous solvent. Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylates such as $\gamma$-butyrolactone (GBL) and $\gamma$-valero-lactone (GVL), and chain carboxylates such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

EXAMPLES

The present disclosure will now be described in further detail with reference to Examples. The present disclosure, however, is not limited to the Examples described below.

[Production of Positive Electrode]

Using $Li_2O$ and NiO as materials, and through baking with the conditions adjusted as described above, a composite oxide (A1) including $Li_2NiO_2$ with a porosity of 2.2% was prepared. The composite oxide (A1), acetylene black (AB), and polyvinylidene fluoride (PVDF) were mixed with a solid content mass ratio of 92:5:3, a suitable amount of N-methyl pyrrolidone (NMP) was added, and the mixture was kneaded to prepare a positive electrode mixture slurry. The positive electrode mixture slurry was applied over a positive electrode core made of an aluminum foil, the applied film was dried, the dried film was rolled using a rolling roller, and the resulting structure was cut in a predetermined electrode size, to obtain a positive electrode in which a positive electrode mixture layer was formed over both surfaces of the positive electrode core. An exposed portion in which the surface of the positive electrode core is exposed was provided at a part of the positive electrode. The composite oxide (A1) included $Li_2NiO_2$ which was the primary component, and small amounts of $Li_2O$ and NiO, and was identified through the X-ray diffraction method that the crystal structure belongs to the space group Immm. D50 of the composite oxide (A1), measured using MT3000II manufactured by MicrotracBEL corporation and with water as a dispersive medium, was 10 $\mu$m.

[Preparation of Non-aqueous Electrolyte]

$LiPF_6$ was dissolved in a mixed solvent obtained by mixing ethylene carbonate (EC) and ethylmethyl carbonate (EMC) in a volume ratio of 3:7 (25°C, 1 atmosphere), in a concentration of 1 mol/L, to prepare a non-aqueous electrolyte.

[Production of Test Cell]

As a negative electrode, a structure obtained by cutting a Li foil in a predetermined size was used. An aluminum lead was attached to the exposed portion of the produced positive electrode, a nickel lead was attached to a predetermined position of the negative electrode, and the positive electrode and the negative electrode were placed opposing each other with a separator made of polyolefin therebetween, to produce an electrode assembly. The electrode assembly was housed in an outer housing, the prepared non-aqueous electrolyte was injected, and an opening of the outer housing was sealed, to obtain a test cell.

<Example 2>

A test cell was produced in a manner similar to Example 1 except that a composite oxide (A2) including $Li_2NiO_2$ with a porosity of 3.6% was used in place of the composite oxide (A1) in the production of the positive electrode.

<Example 3>

A test cell was produced in a manner similar to Example 1 except that a composite oxide (A3) including $Li_2NiO_2$ with a porosity of 4.8% was used in place of the composite oxide (A1) in the production of the positive electrode.

<Example 4>

A test cell was produced in a manner similar to Example 1 except that a composite oxide (A4) including $Li_2NiO_2$ with a porosity of 6.4% was used in place of the composite oxide (A1) in the production of the positive electrode.

<Example 5>

A test cell was produced in a manner similar to Example 1 except that a composite oxide (A5) including $Li_2NiO_2$ with a porosity of 8.2% was used in place of the composite oxide (A1) in the production of the positive electrode.

<Comparative Example>

A test cell was produced in a manner similar to Example 1 except that a composite oxide (A6) including $Li_2NiO_2$ with a porosity of 1.1% was used in place of the composite oxide (A1) in the production of the positive electrode.

For the test cells of Examples and Comparative Example, an initial charge capacity was assessed through the following method. TABLE 1 shows the assessment results along with the porosity of the composite oxide (A) used in the positive electrode. The initial charge capacity shown in TABLE 1 is a relative value with the charge capacity of the test cell of Comparative Example as a reference (100).

[Assessment of Initial Charge Capacity]

Under a temperature environment of 25°C, the test cell was charged with a constant current of 0.3C until a battery voltage reached 4.3 V, and then charged with a constant voltage of 4.3 V until a current value reached 0.02C. A charge capacity at this point was taken as an initial charge capacity.

[TABLE 1]

|  | POROSITY OF COMPOSITE OXIDE A (%) | INITIAL CHARGE CAPACITY |
| --- | --- | --- |
| EXAMPLE 1 | 2.2 | 106 |
| EXAMPLE 2 | 3.6 | 109 |
| EXAMPLE 3 | 4.8 | 110 |
| EXAMPLE 4 | 6.4 | 111 |
| EXAMPLE 5 | 8.2 | 111 |
| COMPARATIVE EXAMPLE | 1.1 | 100 |

As can be understood from the results shown in TABLE 1, the test cells of Examples have larger initial charge capacities in comparison to the test cell of Comparative Example. In other words, by using the composite oxide with a porosity of 2%~10% as the positive electrode active material, a sufficient amount of Li can be supplied to the negative electrode during the initial charging, and the battery capacity can be improved.

Further, a composite oxide (B1) was separately prepared as follows, and test cells of Examples 6 and 7 were produced using a mixture of the composite oxide (B1) and the composite oxide A as the positive electrode active material.

[Synthesis of Composite Oxide (B1)]

$Li_2O$ and NiO were weighed such that a molar ratio of Li and Ni was 0.3:1.7, and were ground and mixed to produce a mixture. Then, the mixture was baked under an oxygen atmosphere at a temperature of 650°C for 20 hours, and was shredded, to obtain a composite oxide (B1). As a result of X-ray diffraction measurement of the composite oxide (B1) using the above-described radiation facility, it was found that, in a range of $2\theta = 21.40°~21.65°$ of the obtained X-ray diffraction pattern, one peak was present having a peak top at 21.48°. Further, it was confirmed through referencing with the JCPDS card including other peaks that the composition of the composite oxide (B 1) was $Li_{0.3}Ni_{1.7}O_2$. D50 of

the composite oxide (B 1) was 5 μm.

<Example 6>

A test cell was produced in a manner similar to Example 1 except that a mixture in which the composite oxides (A1) and (B1) were mixed with a mass ratio of 98:2 was used in place of the composite oxide (A1) in the production of the positive electrode.

<Example 7>

A test cell was produced in a manner similar to Example 5 except that a mixture in which the composite oxides (A6) and (B1) were mixed with a mass ratio of 98:2 was used in place of the composite oxide (A6) in the production of the positive electrode.

For the test cells of Examples 1, 5, 6, and 7, a resistance increasing rate was assessed through the following method. TABLE 2 shows the assessment result along with the structure of the positive electrode. The resistance increasing rate shown in TABLE 2 is a relative value with the resistance increasing rate of the test cell of Example 1 as a reference (100).

[Assessment of Resistance increasing rate]

A resistance after 1 cycle of the following cycle test and a resistance after 15 cycles were determined using Battery HiTester BT3562 manufactured by Hioki E. E. Corporation (measurement source frequency: 1 kHz), and a resistance increasing rate was calculated according to the following equation.

Resistance increasing rate = ((resistance after 15 cycles)-(resistance after 1 cycle))/(resistance after 1 cycle)

<Cycle Test>

Under a temperature environment of 25°C, the test cell was charged with a constant current of 0.3C until a battery voltage reached 4.3 V, and then charged with a constant voltage of 4.3 V until a current value reached 0.02C. The test cell was then discharged with a constant current of 0.05C until the battery voltage reached 2.5 V. The charge/discharge cycle was repeated for 15 cycles.

[TABLE 2]

| | POSITIVE ELECTRODE | | | RESISTANCE INCREASING RATE |
|---|---|---|---|---|
| | CONTENT OF COMPOSITE OXIDE A (MASS%) | POROSITY OF COMPOSITE OXIDE A (%) | CONTENT OF COMPOSITE OXIDE B1 (MASS%) | |
| EXAMPLE 1 | 100 | 2.2 | 0 | 100 |
| EXAMPLE 6 | 98 | 2.2 | 2 | 98.0 |
| EXAMPLE 5 | 100 | 8.2 | 0 | 101.0 |
| EXAMPLE 7 | 98 | 8.2 | 2 | 98.1 |

As can be understood from the results shown in TABLE 2, the test cell of Example 6 had a lower increase in resistance after 15 cycles in comparison to the test cell of Example 1. That is, the increase in resistance of the battery can be specifically suppressed when a positive electrode including the composite oxide (A1) and the composite oxide (B1) is used.

In addition, the test cell of Example 5 had a larger increase of resistance after 15 cycles in comparison to the test cell of Example 1. The reason for this can be considered to be that the charge capacity of the composite oxide (A5) having a high porosity is large, resulting in existence of a larger amount of $LiNiO_2$ having a high activity and consequently easier occurrence of the side reaction with the electrolyte, and, in addition, the number of pores 37d connected to the outside as described above is also increased, resulting in easier occurrence of the side reaction with the pores 37d as an active point. In such a case also, by mixing the composite oxide (B1) as in Example 7, the particle surface of the composite oxide (A5) which tends to more easily cause the side reaction can be effectively protected, and the increase in resistance can be maintained at a degree approximately equal to that in Example 6.

REFERENCE SIGNS LIST

10 non-aqueous electrolyte secondary battery, 11 positive electrode, 12 negative electrode, 13 separator, 14 electrode assembly, 16 outer housing can, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 30 positive electrode core, 31 positive electrode mixture layer, 40 negative electrode core, 41 negative electrode mixture layer

**Claims**

1. A positive electrode active material for a non-aqueous electrolyte secondary battery, the positive electrode active material comprising:

   a first lithium-transition metal composite oxide represented by a general formula $Li_aNi_bM1_{1-b}O_2$ (wherein $1.5 \leq a \leq 2.5$, $0.95 \leq b \leq 1.00$, and M1 is at least one element selected from the group consisting of Cu, Sr, Ca, Nb, Si, and Al), wherein
   the first lithium-transition metal composite oxide has pores at an inside thereof, and a porosity of the first lithium-transition metal composite oxide is 2%~10%.

2. The positive electrode active material for the non-aqueous electrolyte secondary battery according to claim 1, wherein the first lithium-transition metal composite oxide has a crystal structure belonging to a space group Immm

3. The positive electrode active material for the non-aqueous electrolyte secondary battery according to claim 1 or 2, wherein
   the first lithium-transition metal composite oxide includes $Li_2O$ and NiO.

4. The positive electrode active material for the non-aqueous electrolyte secondary battery according to any one of claims 1 to 3, further comprising:
   a second lithium-transition metal composite oxide represented by a general formula $Li_cNi_{2-c-d}M2_dO_2$ (wherein $0<c\leq0.5$, $0\leq d\leq0.5$, and M2 is at least one metal element other than Li and Ni).

5. The positive electrode active material for the non-aqueous electrolyte secondary battery according to claim 4, wherein a content of the second lithium-transition metal composite oxide is 0.1 mass%~20 mass% with respect to a total mass of the first lithium-transition metal composite oxide and the second lithium-transition metal composite oxide.

6. The positive electrode active material for the non-aqueous electrolyte secondary battery according to claim 4 or 5, wherein
   the second lithium-transition metal composite oxide has at least one diffraction peak having a peak top in a diffraction angel ($2\theta$) of $21.40°$~$21.65°$ in radiation X-ray diffraction (with a light energy of 16 keV).

7. The positive electrode active material for the non-aqueous electrolyte secondary battery according to any one of claims 4 to 6, further comprising:
   a third lithium-transition metal composite oxide represented by a general formula $Li_xNi_{1-y-z}Co_yM3_zO_2$ (wherein $0.97\leq x\leq1.2$, $0\leq y\leq0.2$, $0<z\leq0.5$, and M3 is at least one element selected from the group consisting of Mn, W, Mg, Mo, Nb, Ti, Si, Al , and Zr).

8. The positive electrode active material for the non-aqueous electrolyte secondary battery according to claim 7, wherein a content of the first and second lithium-transition metal composite oxides is 0.1 mass%~15 mass% with respect to a total mass of the first lithium-transition metal composite oxide, the second lithium-transition metal composite oxide, and the third lithium-transition metal composite oxide.

9. The positive electrode active material for the non-aqueous electrolyte secondary battery according to claim 7 or 8, wherein

the third lithium-transition metal composite oxide has a crystal structure belonging to a space group R-3m.

10. The positive electrode active material for the non-aqueous electrolyte secondary battery according to any one of claims 7 to 9, wherein

on a particle surface of the third lithium-transition metal composite oxide, a compound containing at least one element selected from the group consisting of Sr, Ca, W, Mg, Nb, Ti, Si, Al, B, and Zr is adhered.

11. The positive electrode active material for the non-aqueous electrolyte secondary battery according to claim 10, wherein

an amount of the compound containing at least one element selected from the group consisting of Sr, Ca, W, Mg, Nb, Al, B, and Zr is 0.05 mol%~1.0 mol% in equivalence of the metal elements, with respect to the metal elements of the third lithium-transition metal composite oxide other than Li.

12. A non-aqueous electrolyte secondary battery comprising:

a positive electrode including the positive electrode active material for the non-aqueous electrolyte secondary battery according to any one of claims 1 to 11;
a negative electrode; and
a non-aqueous electrolyte.

# Figure 1

Figure 2

Figure 3

## INTERNATIONAL SEARCH REPORT

| International application No. |
| --- |
| **PCT/JP2022/027862** |

**A. CLASSIFICATION OF SUBJECT MATTER**

*H01M 4/525*(2010.01)i; *H01M 4/36*(2006.01)i
FI: H01M4/525; H01M4/36 E; H01M4/36 A

According to International Patent Classification (IPC) or to both national classification and IPC

**B. FIELDS SEARCHED**

Minimum documentation searched (classification system followed by classification symbols)
H01M4/525; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/039063 A1 (PANASONIC INTELLECTUAL PROPERTY MANAGEMENT CO., LTD.) 04 March 2021 (2021-03-04) | 1-12 |
| A | JP 09-241027 A (SHARP KABUSHIKI KAISHA) 16 September 1997 (1997-09-16) | 1-12 |
| A | JP 2012-004109 A (SAMSUNG SDI CO., LTD.) 05 January 2012 (2012-01-05) | 1-12 |

☐ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **07 September 2022** | **20 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT

Information on patent family members

International application No.

**PCT/JP2022/027862**

| Patent document cited in search report | | | Publication date (day/month/year) | Patent family member(s) | | | Publication date (day/month/year) |
|---|---|---|---|---|---|---|---|
| WO | 2021/039063 | A1 | 04 March 2021 | CN | 114270573 | A | |
| JP | 09-241027 | A | 16 September 1997 | US | 5817436 | A | |
| | | | | EP | 794155 | A1 | |
| JP | 2012-004109 | A | 05 January 2012 | US | 2011/0305955 | A1 | |
| | | | | EP | 2395582 | A1 | |
| | | | | KR | 10-2011-0136689 | A | |
| | | | | CN | 102280636 | A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6058151 B